# EUROPEAN PATENT SPECIFICATION

(11) **EP 3 687 092 B1**
(45) Date of publication and mention of the grant of the patent: **08.09.2021**
(21) Application number: 20156754.2
(22) Date of filing: 14.02.2007
(51) Int. Cl.: H04L 1/18, H04W 88/02, H04L 1/12, H04W 92/10, H04W 76/20

(54) **METHOD AND SYSTEM FOR RECOVERING FROM DRX TIMING DE-SYNCHRONIZATION IN LTE-ACTIVE**
VERFAHREN UND SYSTEM ZUR RÜCKGEWINNUNG EINER DRX-TIMING-DESYNCHRONISATION IN LTE-ACTIVE
PROCÉDÉ ET SYSTÈME POUR RÉCUPÉRATION D'UNE DÉSYNCHRONISATION D'HORLOGE DRX DANS LTE-ACTIVE

(43) Date of publication of application: 29.07.2020
(62) Divisional of application: 18189244.9
(73) Proprietor: GUANGDONG OPPO MOBILE TELECOMMUNICATIONS CORP., LTD., Wusha, Chang'an Dongguan, Guangdong 523860 (CN)
(72) Inventor: SUZUKI, Takashi, Tokyo, 107-0052 (JP)
(74) Representative: Finnegan Europe LLP

(56) References cited:
- WO-A2-02/51171
- SUCKCHEL YANG ET AL: "An Adaptive Discontinuous Reception Mechanism Based on Extended Paging Indicator for Power Saving in UMTS", 2006 IEEE 64TH VEHICULAR TECHNOLOGY CONFERENCE : VTC 2006-FALL ; 25 - 28 SEPTEMBER 2006, MONTREAL, QUEBEC, CANADA, PISCATAWAY, NJ : IEEE OPERATIONS CENTER, 1 September 2006 (2006-09-01), pages 1-5, XP031051187, ISBN: 978-1-4244-0062-1
- ETSI: "3GPP TS 25.304: User equipment procedures in idle mode and procedures for cell reselection in connected mode", , 31 December 2006 (2006-12-31), XP002437992, Retrieved from the Internet: URL:http://www.3gpp.org/ftp/Specs/html-inf o/25304.htm [retrieved on 2007-06-15]
- "Radio Resource Control (RRC) Protocol Specification V6.9.0", 3RD GENERATION PARTNERSHIP PROJECT; TECHNICAL SPECIFICATION GROUP RADIO ACCESS NETWORK;EVOLVED UNIVERSAL TERRESTRIAL ACCESS (E_UTRA), vol. TS 25.331, 31 March 2006 (2006-03-31) , pages 44-70, XP002563016,

## Description

The present disclosure relates generally to the long-term evolution (LTE) of third generation partnership project (3GPP), and in particular, to DRX timing de-synchronization in an L TE_ACTIVE state.

In the long-term evolution infrastructure, a UE can be in one of two radio resource control (RRC) states. These are LTE_IDLE and LTE_ACTIVE.

The UE can be configured for discontinuous reception (DRX) in both the LTE_IDLE and the L TE_ACTIVE states. In the LTE_IDLE state, the DRX allows the UE to synchronize its listening period to a known paging cycle of the network. By synchronizing the listening period, the UE can turn off its radio transceiver during the standby period, thereby significantly saving battery resources. DRX parameters allow the mobile to synchronize with the network and to know that it will not receive another signal until a specified time has elapsed.

It is proposed at the 3GPP TSG-RAN working group that DRX also be used when the UE is in LTE_ACTIVE state. It is further proposed that when in discontinuous reception (DRX) by the user equipment (UE) in L TE_ACTIVE state, that a regular DRX configuration is signaled by a radio resource control (RRC) protocol message and a temporary DRX (re)configuration is signaled by medium access control (MAC) signaling, for example, in the MAC protocol data unit (MAC-PDU) header or MAC control PDU.

In LTE, before user data is sent on a downlink shared channel, the eNB will send a scheduling indication on the downlink shared control channel (DLSCCH) providing the parameters that the UE will use to demodulate the data. However, if the UE misses that DLSCCH scheduling indication, the UE will not know to receive the user data and, hence, will not know to acknowledge (ACK) or negatively ACK (NACK) the user MAC-PDU. The eNB will be awaiting the ACK or NACK, i.e. hybrid ARQ (HARQ), response. When it does not get that response, it is considered a discontinuous transmission (DTX). If the data indication on the downlink shared control channel (DLSCCH) is missed by the UE and the subsequent discontinuous transmit (DTX) on the HARQ feedback channel is misinterpreted as an ACK by the enhanced node B (eNB), a MAC-PDU may be lost. Moreover, if UE automatically increments DRX length according to a rule, e.g. no data activities in a certain duration, the eNB will maintain its current DRX value while the UE will increment its own DRX value. This results in DRX timing de-synchronization, i.e. the eNB and the UE are operating on different DRX periods.

As will be appreciated, this increases the downlink message delivery latency and wastes downlink radio resources. Longer delivery latency should be avoided, especially for critical downlink control messages. Once DRX timing de-synchronization occurs, the eNB has to determine the UE DRX timing in order to send new data to the UE. The eNB may achieve this by sending various probing messages to the UE at those times when it knows the UE may possibly be awake. It will, after a few attempts, find the UE DRX timing, and awaken the UE in order to regain synchronization.

Suckchel Yang et al:: "An Adaptive Discontinuous Reception Mechanism Based on Extended Paging Indicator for Power Saving in UMTS", 2006 IEEE 64TH Vehicular Technology Conference: VTC 2006-Fall; 25 - 28 September 2006, Montreal, Quebec, Canada, Piscataway, NJ: IEEE Operations Center, 1 September 2006, pages 1-5, ISBN: 978-1-4244-0062-1, discloses an Adaptive Discontinuous Reception mechanism in which an eNode B varies the DRX period within a network. This is achieved by the eNode B providing signals to User Equipment indicating preservation, increase, decrease, and reset of the DRX periods via an Extended Paging Indicator.

One aspect of the present invention there is provides a method for Discontinuous Reception, DRX, operation, comprising: while a user equipment, UE, is in Discontinuous Reception, DRX, operation in an L TE_ACTIVE state, detecting that no data is received within a predetermined number of DRX cycles; and in response to the detecting, increasing, by the UE, a length of the DRX. Before the detecting, a radio resource control, RRC message is received by the UE from an enhanced node B, eNB, signaling a rule dictating how the length of the DRX is to be increased if no data is received within a number of DRX cycles. The UE automatically increases the length of the DRX in response to the detecting that no data is received within a predetermined number of DRX cycles. The automatic increase in the length of the DRX comprises increasing the length of the DRX to the next larger value of the DRX as identified by the rule signaled to the UE in advance of the UE in DRX detecting that no data has been received.

Further aspects of the present invention provide user equipment, an enhanced Node B and a wireless communications system configured to implement the above method.

### BRIEF DESCRIPTION OF THE DRAWINGS

The present disclosure will be better understood with reference to the drawings in which
Figure 1 is a block diagram showing a long-term evolution user plane protocol stack;
Figure 2 is a block diagram showing a long-term evolution control plane protocol stack;
**Figure 3a** is a flow chart showing a method to activate, deactivate and reconfigure a DRX period using a MAC-PDU header or MAC control PDU from the eNB side;
**Figure 3b** is a flow chart showing a method to acknowledge deactivation, deactivation or reconfiguration of DRX period from the UE side;
**Figure 4a** is a flow chart showing a method for indicating DRX timing de-synchronization within the system information from the eNB side;
**Figure 4b** is a flow chart showing a method of realizing DRX timing de-synchronization within the system information from a UE side;
**Figure 5a** is a flow chart showing a method of preconfigured wake up time recovery from possible DRX timing de-synchronizations from the eNB perspective; and
**Figure 5b** is a flow chart showing a method for preconfigured wake up time recovery from possible DRX timing de-synchronization from the UE perspective.

### DESCRIPTION OF PREFERRED EMBODIMENTS

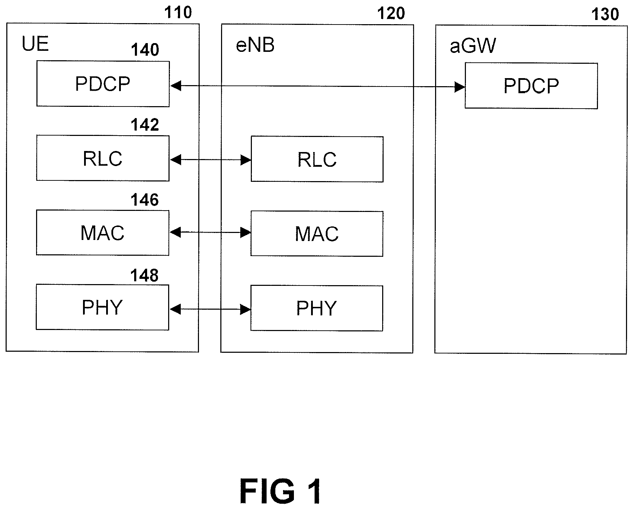

Reference is now made to the drawings. **Figure 1** shows a block diagram illustrating the long-term evolution (LTE) user plane protocol stack.

A UE **110** communicates with both an evolved Node B (eNB) **120** and an access gateway (aGW) **130**.

Various layers are illustrated in the protocol stack. The packet data convergence protocol (PDCP) layer **140** is illustrated both on the UE **110** and on aGW **130.** The PDCP layer **140** performs internet protocol (IP) header compression and decompression, encryption of user data, transfer of user data and maintenance of sequence numbers (SN) for radio bearers.

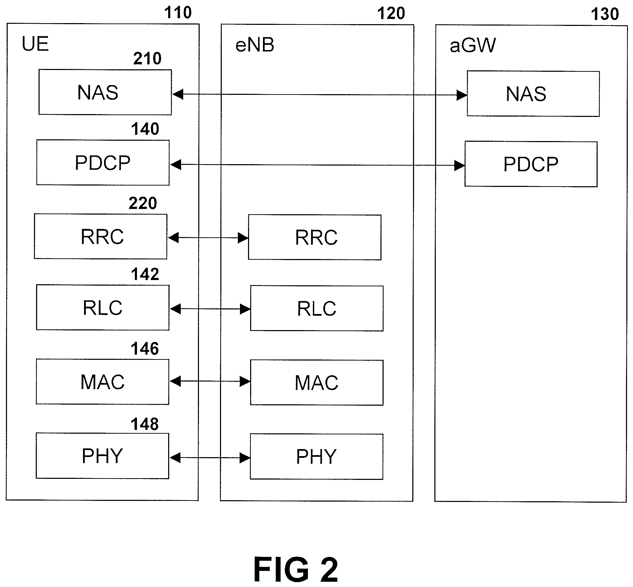

Below the PDCP layer **140** is the radio link control protocol layer **142,** which communicates with the radio link control protocol layer **142** on the eNB **120.** As will be appreciated, communication occurs through the physical layer in protocol stacks such as those illustrated in **Figures 1** and **2****.** However, RLC-PDUs from the RLC layer **142** of the UE are interpreted by the RLC layer **142** on the eNB **120.**

Below RLC layer **142** is the medium access control (MAC) data communication protocol layer **146.** As will be appreciated by those skilled in the art, the RLC and MAC protocols form the data link sublayers of the LTE radio interface and reside on the eNB in LTE and user equipment.

The layer 1 (L1) LTE (physical layer **148**) is below the RLC/MAC layers **144** and **146.** This layer is the physical layer for communications.

Referring to **Figure 2, Figure 2** illustrates the LTE control plane protocol architecture. Similar reference numerals to those used in **Figure 1** will be used in **Figure 2****.** Specifically, UE **110** communicates with eNB **120** and aGW **130.** Further, physical layer **148,** MAC layer **146,** RLC layer **142** and PDCP layer **140** exist within **Figure 2****.**

**Figure 2** also shows the non-access stratum (NAS) layer **210.** As will be appreciated, NAS layer **210** could include mobility management and session management.

The radio resource control protocol layer (RRC) **220,** is the part of the protocol stack that is responsible for the assignment, configuration and release of radio resources between the UE and the E-UTRAN (Evolved universal terrestrial radio access network). The basic functionalities of RRC protocol for LTE is described in 3GPP TR25.813.

As will be appreciated by those skilled in the art, in UMTS, automatic repeat request (ARQ) functionality is carried out within the RLC layer which resides in the radio network controller (RNC). Long Term Evolution (LTE) moves the ARQ functionality from the RNC to eNB where a tighter interaction may exist between the ARQ and the HARQ (within the MAC layer, also located in the eNB).

Various issues regarding DRX in an LTE-ACTIVE state are considered herein.

### DRX signaling procedure

Very efficient signaling procedures for activating and de-activating DRX and specifying the duration of DRX periods are required in order to support a large population of UEs in a cell that are utilizing DRX in an L TE_ACTIVE state.

As will be appreciated by those skilled in the art, if the evolved Node B (eNB) transmits data to the UE during its receiver off period due to a DRX operation, the UE cannot receive the data. Therefore, special effort is required to ensure the UE and the eNB are synchronized regarding when DRX is activated and deactivated.

The indication between the eNB and the UE can be explicitly signaled by the radio resource control (RRC) or layer 1/layer 2 (L1/L2) signaling. As will be appreciated, however, explicit signaling may not be as efficient as desired.

A more efficient solution is to include an optional field in the MAC header of a MAC-PDU (MAC Protocol Data Unit) or a MAC control PDU (MAC PDU which contains only MAC control information) to indicate DRX activation and deactivation. The field preferably indicates the DRX value and timing margin for activation and deactivation. A value of zero, for example, could mean DRX deactivation in the DRX value field in a preferred embodiment. Conversely, if data that is to be transmitted in the next MAC-PDU is the last one in the buffer for the UE, the eNB may extend the MAC header field to include a DRX length initial value. For example, this could be 320 milliseconds.

Several different methods for signaling the DRX period within the MAC-PDU header can be envisaged. For example, three bits may be added to the MAC header to indicate eight values of the DRX period. Thus, rather than a specific time value being sent, a bit value from 000 to 111 could indicate one of eight discrete values.

In an alternative, a smaller field in the MAC header could be used (for example two bits) to indicate increment or decrement. The RRC could indicate default values, and if the MAC header indicates increment or decrement then the UE could change to the pre-specified value, according to the received indication. Similarly, the RRC could define the mapping between the actual DRX value and the value contained in the smaller field.

Once the UE receives the DRX value, it acknowledges it to the eNB by transmitting HARQ ACK and starts the DRX at the appropriate system frame considering propagation delay and processing delay at the eNB. When the eNB receives the ACK from the UE, it also starts the DRX at the appropriate system frame time. As will be appreciated, the eNB does not turn off its transceiver, but simply knows not to transmit messages to the individual UE.

During the awake cycle of a DRX period, if new data has arrived at the eNB for transmission, the eNB can send a MAC-PDU with a header extension set to DRX deactivation or a shorter DRX length depending on the amount of data in the buffer or the quality of service requirements. The UE reconfigures the DRX accordingly and acknowledges the MAC-PDU. When the eNB receives the ACK, it reconfigures the DRX. As indicated above, the deactivation could be accomplished by merely setting the length value to zero.

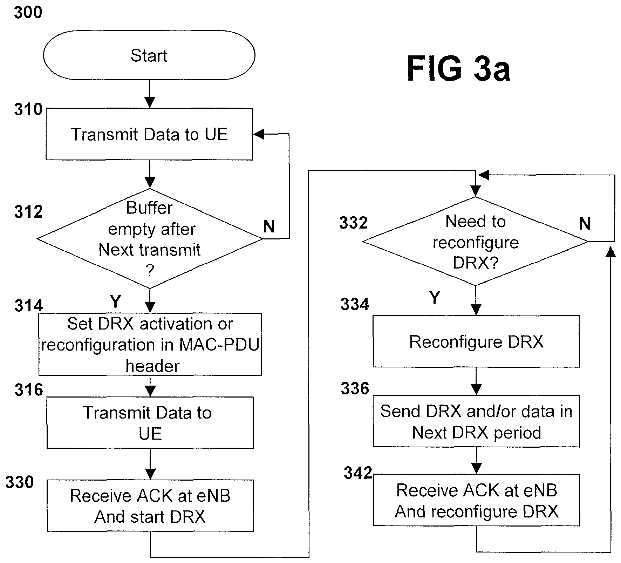

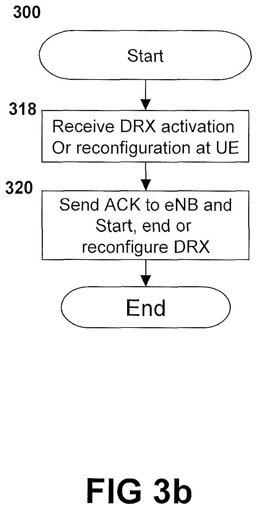

Reference is now made to **Figure 3a** **and** **3b**. **Figure 3a** shows an exemplary method for controlling DRX activation in the L TE_ACTIVE state. The process starts at step **300** and proceeds to step **310** in which data is transmitted to the UE. As will be appreciated by those skilled in the art, data transmission in the LTE_ACTIVE state utilizes the MAC-PDU at the data link layer to transmit the data.

The process next proceeds to step **312** in which a check is made to see whether the buffer of data to be sent to the UE will be empty after the next transmit. If no, the process proceeds back to step **310** in which data is transmitted to the UE. Alternatively, if the buffer will be empty after the next transmit and the data arrival rate is lower than a threshold value, the process proceeds to step **314.**

In step **314,** the eNB sets DRX activation in the MAC-PDU header. As indicated above, this includes a DRX activation value indicating the length of the DRX period and DRX activation time if needed, e.g., the system radio frame number when the DRX activation should be performed. In another embodiment the eNB may simply indicate an increase in the DRX interval. The UE reconfigures the existing DRX interval to a predetermined reduced interval. The predetermined interval may be either known to both eNB and UE or pre-signaled to the UE from the eNB via explicit signaling; either by system broadcast or RRC signaling.

The process then proceeds to step **316** in which the data including the modified MAC-PDU header is sent to the UE.

Reference is now made to **Figure 3b**. In step **318,** the UE receives the data and sees that DRX activation is specified in the MAC-PDU header. The process proceeds to step **320** in which the UE sends an acknowledgement (ACK) to the eNB and starts the DRX at the appropriate system frame considering propagation delay and processing delay at the eNB. If the activation time of the specified DRX is indicated in the received MAC-PDU header, both the UE and the eNB apply the new DRX value at that time.

In step **330** of **Figure 3a**, the eNB receives the ACK from the UE and starts the DRX at the same appropriate system frame.

As will be appreciated, the DRX can continue until various events occur which may require the DRX to be adjusted. One event is the reception of data from the aGW by the eNB for the UE. Depending on the amount of data received, the DRX can either be deactivated or the period of the DRX can be reduced. Other events that may require the adjustment of the DRX include a change of signal power level between the eNB and the UE or possibly a gradual increase in the DRX cycle due to continued data inactivity, among others.

In step **332** the eNB checks to see whether the DRX needs to be adjusted. As indicated above, this could be the situation where data is received to be sent to the UE. Here the DRX can either be deactivated or the period adjusted.

From step **332,** if the DRX does not need to be adjusted, the process proceeds back to step **332** and continues to check whether or not the DRX needs to be adjusted.

Once the process in step **332** finds that the DRX does need to be adjusted, the process proceeds to step **334** in which it adjusts the DRX. This could be deactivating the DRX by transmitting a zero value for the DRX or a shorter DRX or a longer DRX as required.

The MAC-PDU with the modified header (including modified DRX value and the activation time for new DRX value if needed) is sent to the UE in step 336. The MAC-PDU in step **336** could also include any data that has been received by the eNB that needs to be transmitted to the UE. If no data is included then the MAC-PDU is considered a MAC control PDU.

Referring to **Figure 3b****,** the process then proceeds to step **318** in which the MAC-PDU with modified header is received at the UE. The UE recognizes the DRX period is to be adjusted and in step **320** it sends an acknowledgement to the eNB and it adjusts its DRX period at the appropriate system frame considering propagation delay and processing delay as at the eNB. If the activation time is indicated in the MAC-PDU header, both the UE and the eNB apply the new DRX value at that time.

Referring to **Figure 3a****,** in step **342** the eNB receives the ACK and starts the modified DRX period at the same appropriate system frame. The process then proceeds back to step **332** to see whether the DRX needs to be adjusted again.

As will be appreciated by those skilled in the art, one issue with the above occurs in the case of a misinterpretation of an ACK or a NACK. Specifically, the transmitter's hybrid automatic repeat request (HARQ) entity, which is a variation of the ARQ error control method, does not always properly demodulate an ACK or a NACK possibly due to poor channel conditions. Thus, in some situations, one can be interpreted as the other. By having the DRX activation and deactivation occur in the MAC-PDU header, an ACK to NACK or NACK to ACK misinterpretation needs to be handled as misinterpretation of control information signaled between an eNB and a UE can lead to loss of data or possibly radio connection.

### DRX Automatic Incrementation

A further consideration is the incremental extension of the DRX. Rules that dictate how the DRX period can be incremented or decremented (e.g. by factors of two), in a preferred embodiment, can be signaled during the radio bearer (RB) set up. The rules are carried in the RRC RB set-up/reconfiguration or measurement control messages to the UE. In this case, if no data is received after N current DRX cycles, the eNB and the UE increase the DRX length to the next larger value automatically. This eliminates the need for signaling between the eNB and the UE to increase the DRX length and therefore saves network and battery resources.

### Indication of DRX Timing De-Synchronization in System Information

When the eNB determines that the UE is out of synchronization within its DRX timing, the eNB shows the RNTI of the UE in the predefined system information block. When the UE wakes up, it reads the system information block. If the RNTI of the UE is indicated, the UE deactivates the DRX mode and transmits a Continuous Reception Notification message using L1/L2 signaling or MAC signaling to the eNB. On reception of the Continuous Reception Notification message, the eNB will retransmit the data waiting in the buffer to the UE. When the data is acknowledged or HARQ feedback from the UE is received, the eNB removes the RNTI from the system information.

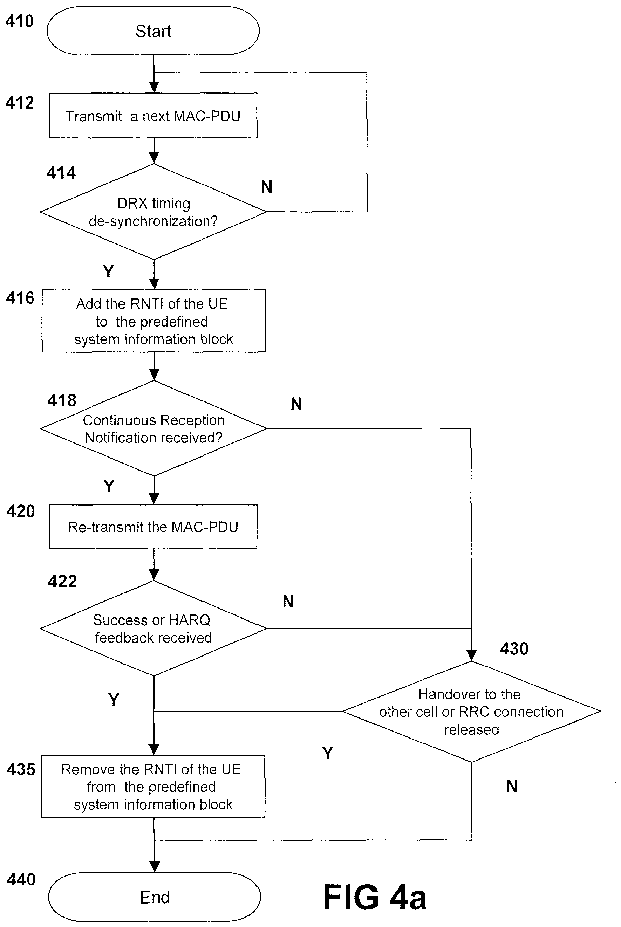

Reference is now made to **Figure 4a**. **Figure 4a** shows a flow chart for a method of signaling the RNTI in the system information to recover from DRX de-synchronization. The process starts at step **410.**

The process proceeds to step **412** in which the eNB transmits the next MAC-PDU.

The process then proceeds to step **414** in which it checks whether a DRX timing de-synchronization has occurred. As indicated above, this could be if the eNB gets no HARQ feedback signals from the UE, in which case the eNB may consider that the UE is out of synchronization in DRX timing.

If no DRX timing de-synchronization is detected in step **414,** the process proceeds back to step **412** continues until a DRX timing de-synchronization is detected.

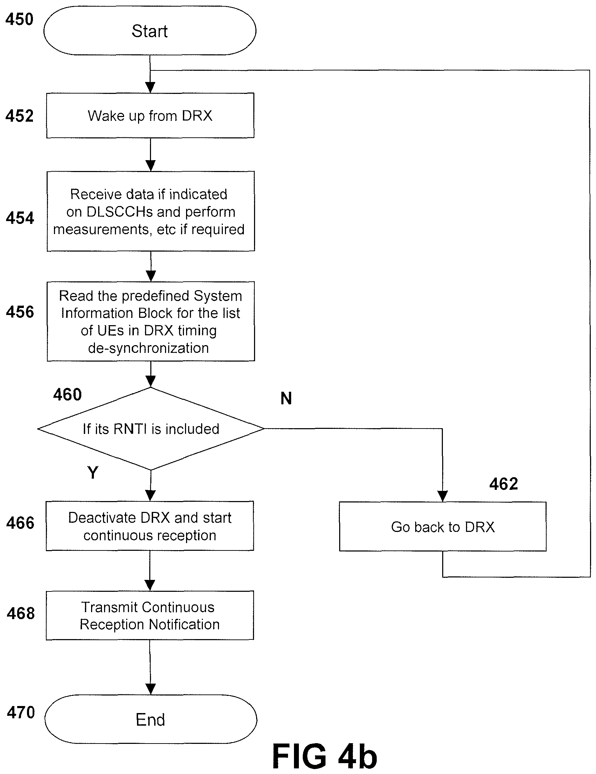

If a DRX timing de-synchronization is detected in step **414,** the process proceeds to step **416** in which the RNTI of the UE is added to a predefined system information block. As will be appreciated, the UE, when waking up from DRX, will check the system information and detect its RNTI, as described with reference to **Figure 4b** below.

From step **416** in **Figure 4a**, the process then waits for a Continuous Reception Notification message. If a Continuous Reception Notification message is received in step **418,** the process proceeds to step **420** in which it retransmits the MAC-PDU. As will be appreciated, this may be the same MAC-PDU that the eNB attempted to transmit in step **412** before a DRX timing de-synchronization was detected in step **414.** The retransmission of the MAC-PDU occurs in step **420.**

The process then proceeds to step **422** in which it checks whether a success or HARQ feedback is received.

If, in step **418,** a Continuous Reception Notification message is not received, or in step **422** if success or HARQ feedback is not received, the process proceeds to step **430** in which a check is made to see whether a handover has occurred or whether the RRC connection is released.

If a handover to another cell is detected or the RRC connection is found released in step **430,** the process proceeds to step **435** in which the RNTI of the UE is removed from the predefined system information block. Similarly, if success is achieved or HARQ feedback is received from step **422,** the process proceeds to step **435** in which the RNTI of the UE is removed from the predefined system information block.

The process then proceeds from step **435** to step **440** in which it is ended.

Alternatively, if handover to another cell or the RRC connection release is found in step **430,** the process proceeds to step **440** in which it is ended.

Reference is now made to **Figure 4b**. On the UE side, the process starts at step **450.**

In step **452,** the UE wakes up from DRX.

The process then proceeds to step **454** in which the UE receives data if indicated on the downlink shared control channels (DLSCCHs) and performs measurements or other functions as required.

The process then proceeds to step **456** in which it reads a pre-defined system information block for a list of UEs in DRX timing de-synchronization.

The process then proceeds to step **460** in which it checks whether the RNTI of the UE is included in the list of UEs in the system information block. If no, the UE proceeds back to DRX in step **462** and then waits for the DRX wake up in step **452.**

Alternatively, from step **460,** if the RNTI of the UE is included in the system information block, the process proceeds to step **466** in which DRX is deactivated and continuous reception is started.

The process then proceeds to step **468** in which a Continuous Reception Notification is transmitted and the process ends in step **470.**

As will be appreciated from the above, the de-synchronization is therefore recovered at the next DRX cycle by the UE detecting its RNTI in the predefined system information block.

### Preconfigured Wake Up Time For Recovery From Possible DRX Timing De-Synchronization

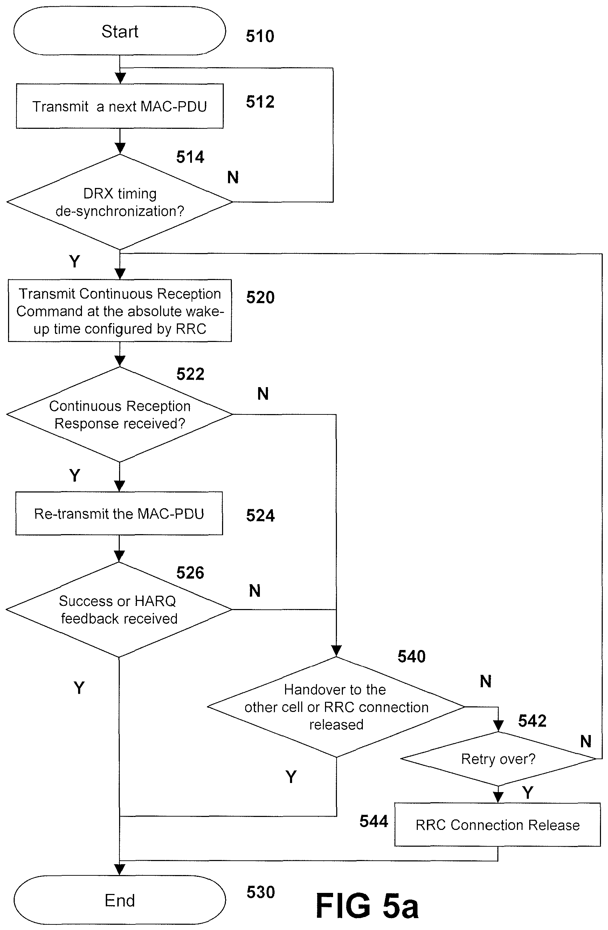

In a further embodiment, when a radio bearer for the interactive or background communication is established or DRX is activated on that bearer, an absolute wake up time can be notified to the UE by RRC. The absolute wake up timing is defined by the radio frame offset (ARFoff) to the system radio frame timing and DRX interval (AINT). Regardless of the current DRX setting, the UE must wake up at the radio frame of ARFoff + N * Alnt where N is an integer. Reference is now made to **Figure 5a****.**

The process starts at step **510** and proceeds to step **512** in which the next MAC-PDU is transmitted.

The process then proceeds to step **514** in which the eNB checks to see whether timing de-synchronization for DRX has occurred. As indicated above, this could occur based on the lack of receipt of HARQ feedback from the UE.

If DRX timing de-synchronization is not detected in step **514,** the process proceeds back to step **512** and continues transmitting the next MAC-PDU.

From step **514,** if DRX timing de-synchronization is detected, the process proceeds to step **520** in which a Continuous Reception Command is transmitted at the absolute wake up time configured by the radio resource control.

The process then proceeds to step **522** in which it checks whether a Continuous Reception Response was received from the UE. If yes, the process proceeds to step **524** in which the MAC-PDU from step **512** for which no HARQ feedback was received is retransmitted in step **524.**

The process then proceeds to step **526** in which it checks whether there has been success or whether HARQ feedback was received. If yes, the process ends at step **530.**

If, from step **522,** Continuous Reception Response was not received or, from step **526,** the HARQ feedback was not received or no success was determined, the process proceeds to step **540** in which a check is made to see whether a handover has occurred or the RRC connection has been released. If it is determined in step **540** that a handover has occurred or the RRC connection has been released, the process proceeds to step **530** and ends.

If, in step **540,** it is determined that no handover has occurred or the RRC connection has been released, then the process proceeds to step **542** in which it checks whether a retry period is over. If no, then the process proceeds back to step **520.** If yes, the process proceeds to step **544** in which the RRC connection is released and the process then ends at step **530.**

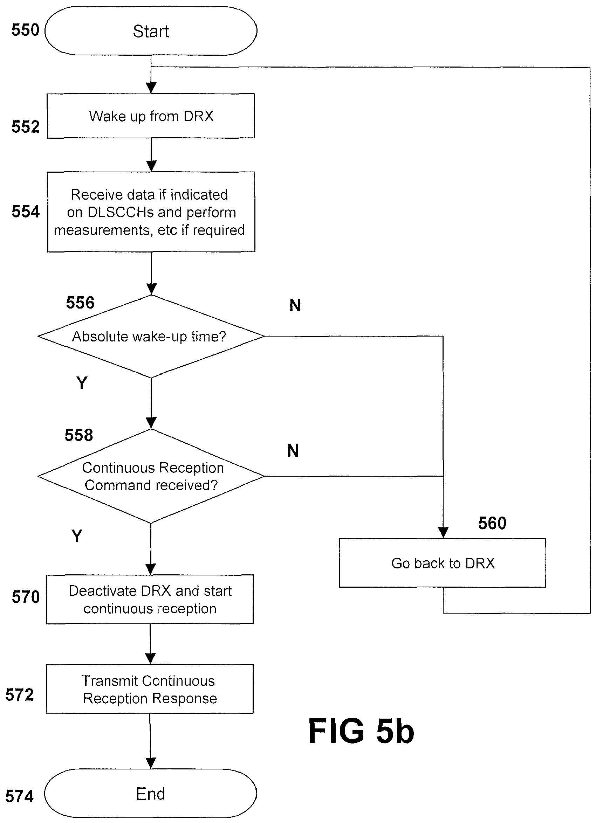

Reference is now made to **Figure 5b**. From the UE perspective, the process starts at step **550** and proceeds to step **552** in which the UE wakes up from a DRX. The process then proceeds to step **554** in which it receives data if indicated on the downlink shared control channels (DLSCCHs) and performs measurements or other functions if required.

The process then proceeds to step **556** in which it checks whether the time is an absolute wake up time. If yes, the process proceeds to step **558,** which the UE checks whether a Continuous Reception Command has been received.

From step **556,** if it is not an absolutely wake up time or step **558,** if not Continuous Reception Command has been received, the process proceeds to step **560** in which the UE goes back into DRX. From step **560,** the process continues by waking up from DRX in step **552.**

Alternatively, if a Continuous Reception Command is received in step **558,** the process proceeds to step **570** in which DRX is de-activated and continuous reception is started. The process then proceeds to step **572** in which the Continuous Reception Response is transmitted and the process ends at step **574.**

Based on the above, when the eNB detects that the UE is out of synchronization in DRX timing, the eNB sends a Continuous Reception Command in L1/L2 signaling or MAC signaling to the UE at an absolute wake up time. The UE wakes up at the absolute wake up time, checks if a Continuous Reception Command is received or not, and if yes, the UE turns on the power to its transceivers and goes back into continuous reception.

In a further alternative, the absolute wake up radio frame offset ARFoff can be calculated from the UE identities such as IMSI in a similar manner that the paging occasion is calculated in UMTS which is described in 3GPP TS25.304. In such a case, the DRX interval may be included in the system information rather than saved via dedicated RRC messages.

As will be appreciated, the benefit of signaling the ARFoff to the UE is that the eNB could align the absolute wake up time with the current ORX setting so that further battery savings can be achieved.

The embodiments described herein are examples of structures, systems or methods having elements corresponding to elements of the techniques of this disclosure. This description may enable those skilled in the art to use embodiments having alternatives elements that likewise correspond to the elements or the techniques of this disclosure. The intended scope of the techniques of this disclosure thus include other structures, systems or methods that do not differ from the techniques of this disclosure as described herein, and further include other structures, systems or methods with insubstantial differences from the techniques of this disclosure as described herein.

## Claims

1. A method for Discontinuous Reception, DRX, operation, comprising:
while a user equipment, UE, (110) is in Discontinuous Reception, DRX, operation in an LTE_ACTIVE state, detecting that no data is received within a predetermined number of DRX cycles; and
in response to the detecting, increasing, by the UE, a length of the DRX, **characterized in that**:
before the detecting, a radio resource control, RRC message is received by the UE from an enhanced node B, eNB, signaling a rule dictating how the length of the DRX is to be increased if no data is received within a number of DRX cycles;
wherein the UE automatically increases the length of the DRX in response to the detecting that no data is received within a predetermined number of DRX cycles; and
wherein the automatic increase in the length of the DRX comprises increasing the length of the DRX to the next larger value as identified by the rule signaled to the UE in advance of the UE in DRX detecting that no data has been received.

2. The method of claim 1, wherein the rule signaled to the UE by the eNB comprises increasing the length of the DRX in a series of steps if no data is received wherein each step increases the length of the DRX by a factor of two.

3. A user equipment (110) configured for discontinuous reception operation comprising:
a communications subsystem having a receiver; and
a processor,
wherein the user equipment (110) is configured to perform the method of any preceding claim.

4. An enhanced Node B, eNB, (120) configured for discontinuous reception, DRX, operation comprising:
a communications subsystem configured to communicate with a user equipment, UE, (110), the user equipment being in an LTE_ACTIVE state; **characterized in that** the eNB is configured to notify the UE by radio resource control (220), a rule dictating how the length of the DRX is to be increased if no data is received within a number of DRX cycles wherein
the eNB further comprises:
adjusting means for adjusting the DRX;
wherein the adjusting means is further configured to:
detect that no data is received by the UE within a predetermined number of DRX cycles; and
in response to the detecting, increase a length of the DRX automatically to the next larger value of the DRX as identified by the rule previously signaled to the UE by radio resource control.

5. A wireless communication system comprising a plurality of user equipments (110) as claimed in claim 3 and at least one enhanced Node B (120) as claimed in claim 4.

## Patentansprüche

1. Verfahren für einen Betrieb des diskontinuierlichen Empfangs, DRX, das Folgendes umfasst:
während sich ein Anwendergerät, UE, (110) in dem Betrieb des diskontinuierlichen Empfangs, DRX, in einem LTE_ACTIVE-Zustand befindet, Detektieren, dass keine Daten innerhalb einer vorbestimmten Anzahl von DRX-Zyklen empfangen werden; und
in Reaktion auf das Detektieren Erhöhen einer Länge des DRX durch das UE, **dadurch gekennzeichnet, dass**:
vor dem Detektieren eine Funkbetriebsmittelsteuerungsnachricht, RRC-Nachricht, durch das UE von einem verbesserten Knoten B, eNB, empfangen wird, die eine Regel signalisiert, die vorgibt, wie die Länge des DRX erhöht werden soll, wenn keine Daten innerhalb einer Anzahl von DRX-Zyklen empfangen werden;
wobei das UE in Reaktion auf das Detektieren, dass keine Daten innerhalb einer vorbestimmten Anzahl von DRX-Zyklen empfangen werden, automatisch die Länge des DRX erhöht; und
wobei die automatische Erhöhung der Länge des DRX das Erhöhen der Länge des DRX auf den nächstgrößeren Wert umfasst, wie durch die Regel identifiziert, die dem UE signalisiert wird, bevor das UE beim DRX detektiert, dass keine Daten empfangen wurden.

2. Verfahren nach Anspruch 1, wobei die dem UE durch den eNB signalisierte Regel das Erhöhen der Länge des DRX in einer Reihe von Schritten umfasst, wenn keine Daten empfangen werden, wobei jeder Schritt die Länge des DRX um einen Faktor von zwei erhöht.

3. Anwendergerät (110), das für den Betrieb des diskontinuierlichen Empfangs konfiguriert ist, das Folgendes umfasst:
ein Kommunikations-Teilsystem mit einem Empfänger; und
einen Prozessor,
wobei das Anwendergerät (110) konfiguriert ist, das Verfahren nach einem vorhergehenden Anspruch durchzuführen.

4. Verbesserter Knoten B, eNB, (120), der für einen Betrieb des diskontinuierlichen Empfangs, DRX, konfiguriert ist, der Folgendes umfasst:
ein Kommunikations-Teilsystem, das konfiguriert ist, mit einem Anwendergerät, UE, (110) zu kommunizieren, wobei sich das Anwendergerät in einem LTE_ACTIVE-Zustand befindet; **dadurch gekennzeichnet, dass** der eNB konfiguriert ist, dem UE durch Funkbetriebsmittelsteuerung (220) eine Regel anzukündigen, die vorgibt, wie die Länge des DRX erhöht werden soll, wenn keine Daten innerhalb einer Anzahl von DRX-Zyklen empfangen werden, wobei
der eNB ferner Folgendes umfasst:
Einstellungsmittel zum Einstellen des DRX;
wobei die Einstellungsmittel ferner konfiguriert sind:
zu detektieren, dass keine Daten durch das UE innerhalb einer vorbestimmten Anzahl von DRX-Zyklen empfangen werden; und
in Reaktion auf das Detektieren eine Länge des DRX automatisch auf den nächstgrößeren Wert des DRX zu erhöhen, wie durch die Regel identifiziert, die vorher dem UE durch Funkbetriebsmittelsteuerung signalisiert wird.

5. Drahtloses Kommunikationssystem, das mehrere Anwendergeräte (110) nach Anspruch 3 und wenigstens einen verbesserten Knoten B (120) nach Anspruch 4 umfasst.

## Revendications

1. Procédé de fonctionnement en réception discontinue (DRX), comprenant les étapes consistant à :
pendant qu'un équipement d'utilisateur (UE) (110) fonctionne en réception discontinue (DRX) dans un état LTE_ACTIVE, détecter qu'aucune donnée n'est reçue pendant un nombre prédéterminé de cycles DRX ; et
en réponse à la détection, augmenter, par l'UE, une longueur de la DRX,
le procédé étant **caractérisé en ce que** :
avant la détection, un message de contrôle des ressources radio (RRC) est reçu par l'UE en provenance d'un nœud B amélioré (eNB) qui signale une règle qui dicte comment doit être augmentée la longueur de la DRX si aucune donnée n'est reçue pendant un nombre de cycles DRX ;
l'UE augmentant automatiquement la longueur de la DRX en réponse à la détection du fait qu'aucune donnée n'est reçue pendant un nombre prédéterminé de cycles DRX ; et
l'augmentation automatique de la longueur de la DRX comprenant l'augmentation de la longueur de la DRX jusqu'à la valeur supérieure suivante, identifiée par la règle signalée à l'UE, avant que l'UE en DRX ne détecte qu'aucune donnée n'a été reçue.

2. Procédé selon la revendication 1, dans lequel la règle signalée à l'UE par l'eNB comprend l'augmentation de la longueur de la DRX en une série d'étapes si aucune donnée n'est reçue, chaque étape augmentant la longueur de la DRX d'un facteur égal à deux.

3. Équipement d'utilisateur (110) configuré pour un fonctionnement en réception discontinue et comprenant :
un sous-système de communication comportant un récepteur ; et
un processeur,
l'équipement d'utilisateur (110) étant configuré pour réaliser le procédé selon l'une quelconque des revendications précédentes.

4. Nœud B évolué (eNB) (120) configuré pour un fonctionnement en réception discontinue (DRX) et comprenant :
un sous-système de communication configuré pour communiquer avec un équipement d'utilisateur (UE) (110), l'équipement d'utilisateur étant dans un état LTE_ACTIVE ;
l'eNB étant **caractérisé en ce qu'**il est configuré pour notifier à l'UE, par un contrôle des ressources radio (220), une règle qui dicte comment doit être augmentée la longueur de la DRX si aucune donnée n'est reçue pendant un nombre de cycles DRX,
l'eNB comprenant en outre :
un moyen de réglage pour régler la DRX ;
le moyen de réglage étant en outre configuré pour :
détecter qu'aucune donnée n'est reçue par l'UE pendant un nombre prédéterminé de cycles DRX ; et
en réponse à la détection, augmenter automatiquement une longueur de la DRX jusqu'à la valeur supérieure suivante de la DRX, identifiée par la règle signalée antérieurement à l'UE par un contrôle des ressources radio.

5. Système de communication sans fil comprenant une pluralité d'équipements d'utilisateur (110) selon la revendication 3 et au moins un nœud B amélioré (120) selon la revendication 4.
